# EUROPÄISCHE PATENTSCHRIFT

(11) **EP 1 252 679 B1**
(45) Veröffentlichungstag und Bekanntmachung des Hinweises auf die Patenterteilung: **07.04.2004**
(21) Anmeldenummer: 01907371.7
(22) Anmeldetag: 17.01.2001
(51) Int. Cl.: H01M 8/06, C01B 3/02, B05B 7/00

(54) **ZERSTÄUBUNGSVORRICHTUNG**
ATOMIZING DEVICE
DISPOSITIF DE PULVERISATION

(30) Priorität: 19.01.2000 DE 10002004
(43) Veröffentlichungstag der Anmeldung: 30.10.2002
(73) Patentinhaber: ROBERT BOSCH GMBH, 70442 Stuttgart (DE)
(72) Erfinder: NAU, Michael, 72175 Dornhan/Aischfeld (DE); RUOFF, Manfred, 71696 Moeglingen (DE); BAREIS, Marc, 71706 Markgroeningen (DE); ILGNER, Frank, 70499 Stuttgart (DE); HARNDORF, Horst, 71701 Schwieberdingen (DE)
(86) Internationale Anmeldenummer: PCT/DE2001/000170
(87) Internationale Veröffentlichungsnummer: WO 2001/054219

(56) Entgegenhaltungen:
- FR-A- 2 228 360
- GB-A- 742 167
- US-A- 2 163 139
- US-A- 3 607 419
- US-A- 4 030 244
- US-A- 4 059 415
- US-A- 4 483 805
- US-A- 5 053 170

## Beschreibung

Die Erfindung betrifft eine Zerstäubungsvorrichtung nach dem Oberbegriff des Anspruchs 1.

### Stand der Technik

Unter den alternativen Antriebskonzepten für Kraftfahrzeuge finden zur Zeit vor allem brennstoffzellengestützte Systeme eine verstärkte Aufmerksamkeit. Diese Systeme beinhalten üblicherweise PEM-Brennstoffzellen (PEM: Polymer Electrolyte Membrane), die mit Wasserstoff und Luft als Energieträger betrieben werden.

Da sich die Betankung und Speicherung von Wasserstoff im Kraftfahrzeug nach wie vor als problematisch erweist, wird der Wasserstoff in einer vorgeschalteten Reformerstufe aus gut zu handhabenden Kraftstoffen wie beispielsweise Methanol, Methan, Diesel oder Benzin je nach Bedarf direkt "on board" hergestellt und sofort verbraucht. Die dabei zum Einsatz kommenden Reformer stellen chemische Reaktoren dar, mit deren Hilfe die Kraftstoffe unter Luft- und Feuchtigkeitszusatz beispielsweise bei 800°C an beheizten Katalysatoren partiell zu Wasserstoff und weiteren Folgeprodukten wie CO und CO₂ oxidiert werden.

Dabei kommt der Beschickung des Reformers mit den für die Reaktion benötigten Edukten eine große Bedeutung zu. Üblicherweise werden alle Edukte wie Luft, Wasser und Kraftstoff in gasförmigem Zustand dem Reformer zugeführt. Dies erfordert einen Vorverdampfer, der in der Lage ist, die entsprechenden Mengen an gasförmigem Kraftstoff und Wasserdampf zur Verfügung zu stellen.

Während der Kaltstartphase kommt es allerdings zu Problemen, da die flüssigen Edukte dann nicht über die Abwärme des Reformers verdampft werden können, sondern nur mittels eines elektrisch beheizten Verdampfers. Auch bei sich abrupt ändernden Lastwechselanforderungen sind konventionelle Verdampfer nicht in der Lage, verzögerungsfrei die entsprechenden Mengen an gasförmigen Reaktanden zu erzeugen.

Alternativ wurden daher Konzepte entwickelt, Treibstoffe und Wasser in flüssiger Form direkt in den Reformer einzudüsen. Um jedoch eine möglichst optimale Reaktionsführung im Reformer zu gewährleisten, müssen die flüssigen Edukte in feinstverteilter Form in den Reformer eingetragen werden. In der US-PS 3,971,847 wird ein Reaktor zur Herstellung von Wasserstoff beschrieben, der eine Düse beinhaltet, mit deren Hilfe flüssige Kohlenwasserstoffe in einen Luftstrom eingesprüht werden. Der entstehende Nebel wird an Ablenkplatten verwirbelt bevor er in die eigentliche Reaktionszone gelangt. Das zur Reaktion benötigte Wasser wird jedoch separat in einem Vorverdampfer verdampft.

Die zu lösende Aufgabe besteht darin, eine Zerstäubungsvorichtung für die gleichzeitige Zerstäubung von Wasser und flüssigen Kraftstoffen bereitzustellen, wobei die Zerstäubungsvorrichtung einen sehr hohen Zerstäubungs- und Vermischungsgrad der Edukte und darüber hinaus eine verzögerungsfreie Zudosierung der flüssigen Edukte gewährleisten soll.

### Vorteile der Erfindung

Die Zerstäubungsvorrichtung mit den in den unabhängigen Ansprüchen genannten Merkmalen weist den Vorteil auf, daß ein Gas/Flüssigkeitsgemisch erzeugt wird, das sich durch einen hohen Zerstäubungsgrad und eine gute Durchmischung der Reaktanden auszeichnet. Darüber hinaus wird ein gutes Kaltstartverhalten des Systems und eine adäquate Reaktionsfähigkeit auf dynamische Lastwechsel gewährleistet.

Der hohe Zerstäubungsgrad wird erreicht, indem die zu zerstäubende Flüssigkeit in ein von einem Gasstrom durchströmtes erstes Venturirohr geleitet und dort entgegen der Strömungsrichtung in den Gasstrom eingespritzt wird. Der Gasstrom weist im Bereich der Austrittsöffnung der Flüssigkeitszuleitung eine hohe Strömungsgeschwindigkeit auf, was die Zerstäubungswirkung noch verstärkt. Da die Zerstäubungsvorrichtung vorzugsweise mehrere Flüssigkeitszuleitungen beinhaltet, kann je nach Betriebszustand des Reformers die jeweils erforderliche Gemischmenge und -zusammensetzung zur Verfügung gestellt werden.

Aufgrund der rein gasunterstützten Zerstäubung der Flüssigkeiten sind nur geringe Flüssigkeitsdrücke erforderlich und der Einbau kostspieliger Hochdruckpumpen entfällt.

Durch die in den Unteransprüchen aufgeführten Maßnahmen sind vorteilhafte Weiterbildungen und Verbesserungen der in den unabhängigen Ansprüchen angegebenen Zerstäubungsvorrichtung möglich.

In einer besonders vorteilhaften Ausgestaltung befindet sich das erste Venturirohr innerhalb eines Gasrohres, das ein zweites Venturirohr ausbildet. Das erste Venturirohr ist dabei so ausgestaltet, daß der hindurchstromende Teilgasstrom an der Austrittsöffnung der Flüssigkeitszuleitung eine hohe Strömungsgeschwindigkeit aufweist. Da der überwiegende Anteil des Gasstroms als Restgasstrom am ersten Venturirohr vorbeiströmt, treten kaum Drosselverluste auf.

Vorteilhaft ist es, das erste Venturirohr so innerhalb des zweiten anzuordnen, daß die austrittsseitige Öffnung des ersten Venturirohrs sich im Bereich des kleinsten Querschnitts des zweiten Venturirohres befindet, da der am ersten Venturirohr vorbeiströmende Restgasstrom in diesem Bereich die höchste Strömungsgeschwindigkeit aufweist und auf diesem Wege das aus dem ersten Venturirohr austretende Gas/Flüssigkeitsgemisch homogen im gesamten Gasstrom verteilt wird.

Eine vorteilhafte Weiterbildung besteht darin, das zweite Venturirohr innerhalb eines weiteren Gasrohres anzuordnen, das ein drittes Venturirohr ausbildet. Dies verstärkt den bereits beschriebenen Effekt einer effektiven Zerstäubung bei geringen Drosselverlusten. Das zweite Venturirohr ist dabei vorzugsweise so im dritten angeordnet, daß sich dessen austrittsseitige Öffnung im Bereich des geringsten Querschnitts des dritten Venturirohrs befindet.

### Zeichnungen

Ein Ausführungsbeispiel der Erfindung ist in der Zeichnung dargestellt und in der nachfolgenden Beschreibung näher erläutert. Es zeigen Figur 1 einen Querschnitt durch ein erstes Ausführungsbeispiel der erfindungsgemäßen Zerstäubungsvorrichtung, Figur 2 einen Querschnitt durch ein zweites Ausführungsbeispiel und Figur 3 einen Querschnitt eines an der Austrittsöffnung vorgesehenen federgestützten Rückschlagventils.

### Ausführungsbeispiele

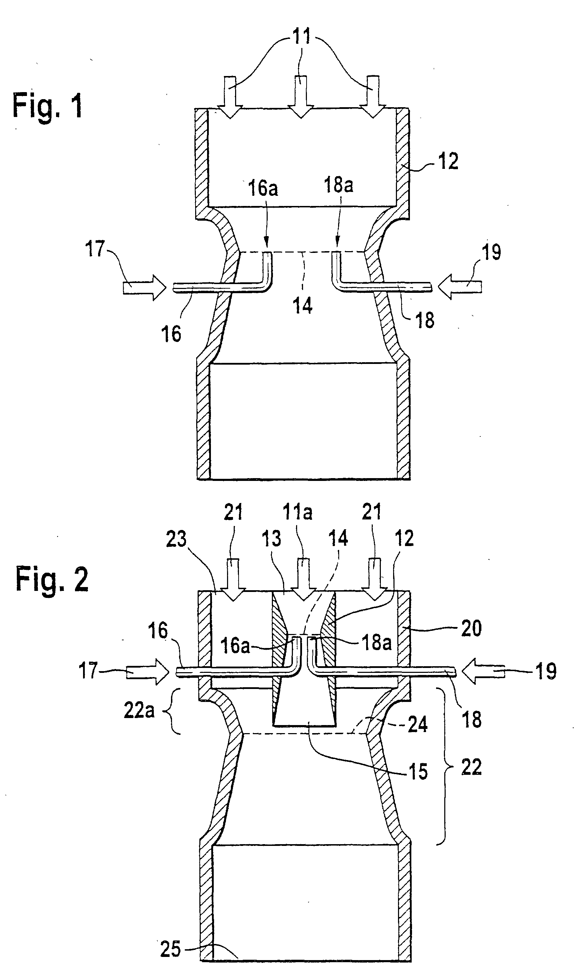

Die in Figur 1 dargestellte Zerstäubungsvorrichtung umfaßt ein erstes Venturirohr 12, das von einem Gasstrom 11 durchströmt wird. Im Bereich des kleinsten Querschnitts 14 des ersten Venturirohres 12, der auch als Kehlquerschnitt bezeichnet wird, münden mindestens eine, vorzugsweise zwei Flüssigkeitszuleitungen 16, 18 in den Gasstrom 11. Diese führen der Gaszuleitung die Flüssigkeitsströme 17 und 19 zu und münden an den Austrittsöffnungen 16a und 18a in den Gasstrom 11. Die Flüssigkeitszuleitung 16, 18 durchstößt dabei weitgehend senkrecht die Außenwand des ersten Venturirohres 12 und weist innerhalb des Venturirohres 12 eine Krümmung um vorzugsweise 90° auf, so daß die Austrittsöffnung 16a, 18a der Strömungsrichtung des Gasstroms 11 entgegen gerichtet ist. Der mittels der Flüssigkeitszuleitung 16, 18 transportierte Flüssigkeitsstrom 17, 19 tritt ebenfalls entgegen der Strömungsrichtung des Gasstroms 11 in das erste Venturirohr 12 ein. Da sich die Austrittsöffnung 16a, 18a im Bereich des Kehlquerschnitts 14 des Venturirohres 12 befindet, wird die Flüssigkeit durch die an dieser Stelle sehr hohe Strömungsgeschwindigkeit des Gasstroms 11 mitgerissen und zerstäubt.

Der Gasstrom 11 setzt sich im wesentlichen aus den gasförmigen Edukten des Reformers zusammen und enthält vor allen Dingen Luft, Wasserdampf oder auch gasförmige Kraftstoffe. Diese können schon vor Eintritt in die erfindungsgemäße Zerstäubungsvorrichtung vermischt sein; es ist aber auch möglich, Wasserdampf und gasförmige Kraftstoffe dem Gasstrom 11 erst nach Verlassen der Zerstäubungsvorrichtung zuzuführen. Als flüssige Edukte werden der Zerstäubungsvorrichtung Wasser und flüssige Kraftstoffe wie Benzin, Diesel, Methanol, Methanol/Wassermischungen oder Benzin/Wasseremulsionen zugeführt. Da die Zerstäubungsvorrichtung vorzugsweise mehr als eine Flüssigkeitszuleitung 16, 18 enthält, lassen sich die flüssigen Edukte wahlweise einzeln oder gemischt im Gasstrom 11 zerstäuben.

In Figur 2 ist ein zweites Ausführungsbeispiel der erfindungsgemäßen Zerstäubungsvorrichtung dargestellt. Das erste Venturirohr 12 befindet sich innerhalb eines Gasrohres 20, das vom Teilgasstrom 11a und vom Restgasstrom 21 durchströmt wird. Das Gasrohr 20 weist ein zweites Venturirohr 22 auf.

Im Falle einer ersten, in Figur 2 dargestellten Variante des zweiten Ausführungsbeispiels ist die eintrittsseitige Öffnung 13 des ersten Venturirohres 12 innerhalb des Gasrohres 20 so positioniert, daß der Teilgasstrom 11a beim Eintritt in das erste Venturirohr 12 eine vergleichbare Strömungsgeschwindigkeit aufweist wie der Restgasstrom 21. Das erste Venturirohr 12 ist beispielsweise so ausgestaltet, daß dessen Profil und Querschnittsverengung zu einer wesentlich höheren Strömungsgeschwindigkeit des Teilgasstroms 11a führt als die Ausgestaltung des zweiten Venturirohres 22 im Restgasstrom 21. Die erhöhte Strömungsgeschwindigkeit des Teilgasstroms 11a im Bereich der Austrittsöffnung 16a, 18a verstärkt die gute Zerstäubungswirkung der erfindungsgemäßen Vorrichtung, allerdings bedingen höhere Strömungsgeschwindigkeiten stets auch höhere Drosselverluste. Da diese jedoch nur in dem vom Volumen her relativ bedeutungslosen Teilgasstrom 11a auftreten, sind sie zu vernachlässigen.

Eine nicht abgebildete zweite Ausführungsvariante des in Figur 2 dargestellten Ausführungsbeipiels ergibt sich, wenn die eintrittsseitige Öffnung 13 des ersten Venturirohrs 12 nicht, bezogen auf die Strömungsrichtung des Restgasstroms 21, vor dem als Venturirohr 22 ausgestalteten Bereich des Gasrohres 20 angeordnet ist, sondern innerhalb, im Bereich der Querschnittsverengung 22a des zweiten Venturirohrs 22.

Da an dieser Stelle beide Gasströme 11a, 21 eine bereits deutlich erhöhte Strömungsgeschwindigkeit aufweisen, treten im Bereich des Kehlquerschnitts 14 des ersten Venturirohrs 12 noch höhere Strömungsgeschwindigkeiten im Teilgasstrom 11a auf als bei der oben beschriebenen ersten Ausführungsvariante des in Figur 2 dargestellten Ausführungsbeispiels. Die Zerstäubungswirkung der Vorrichtung wird so weiter optimiert, ohne daß die Drosselverluste in nennenswertem Umfang zunehmen.

Die austrittsseitige Öffnung 15 des ersten Venturirohrs 12 ist in beiden Ausführungsvarianten des zweiten Ausführungsbeispiels innerhalb des Gasrohrs 20 so positioniert, daß sie sich im Bereich des Kehlquerschnitts 24 des zweiten Venturirohres 22 befindet. Besonders vorteilhaft ist eine Position, die in Strömungsrichtung des Restgasstroms 11a einige Millimeter vor dem Kehlquerschnitt 24 liegt. In diesem Bereich erreicht der Restgasstrom 21 seine höchste Strömungsgeschwindigkeit, wodurch sich der mit Flüssigkeit beladene Teilgasstrom 11a homogen im Restgasstrom 21 verteilt.

Ein drittes, aus Gründen der Übersichtlichkeit nicht dargestelltes Ausführungsbeispiel basiert auf dem in Figur 2 dargestellten zweiten Ausführungsbeispiel. Es weist ein weiteres Gasrohr auf, das zusätzlich ein drittes Venturirohr ausbildet und in dem sich das erste Gasrohr 20 befindet. Die austrittsseitige Öffnung 25 des Gassrohres 20 ist dabei so innerhalb des weiteren Gasrohres angeordnet, daß sie sich im Bereich des Kehlquerschnitts des dritten Venturirohres befindet.

Sinngemäß sind bei diesem dritten Ausführungsbeispiel mehrere Ausführungsvarianten in Bezug auf die Position der eintrittsseitigen Öffnung 23 des ersten Gasrohres 20 innerhalb des weiteren Gasrohres bzw. des ersten Venturirohres 12 innerhalb des zweiten Venturirohres 22 denkbar, die auf den Ausfuhrungsvarianten des zweiten Ausführungsbeispiels basieren. Auch Ausführungsformen mit vier und mehr ineinandergeschachtelten Venturirohren sind denkbar.

Die Austrittsöffnung 16a, 18a sind beispielsweise als Rückschlagventile ausgestaltet, so daß sie sowohl eine eindüsende Wirkung auf die über die Flüssigkeitszuleitung 16, 18 zudefuhrte Flussigkeit haben als auch ein Nachtropfen der Flüssigkeit verhindern.

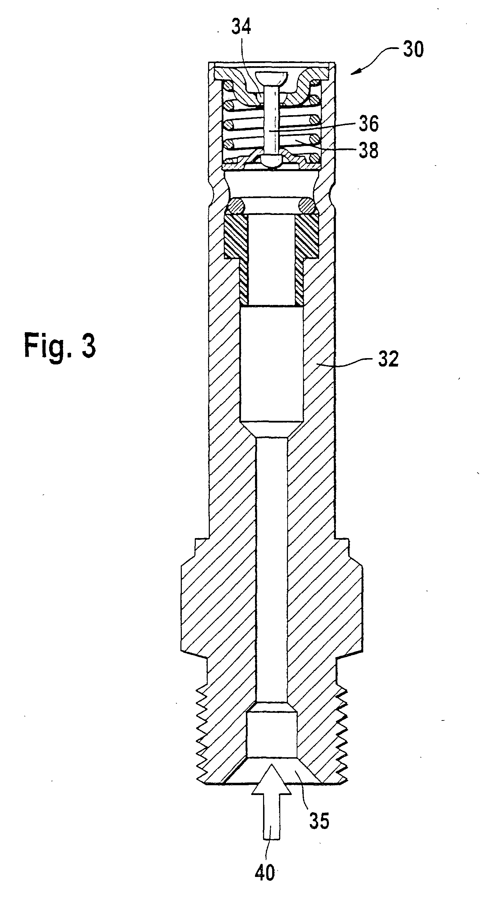

Ein Ausfuhrungsbeipiel eines derartigen Rückschlagventils 30 ist in Figur 3 dargestellt. Das Rückschlagventil 30 ist beispielsweise als Schirmstrahlventil ausgeführt, es eignen sich jedoch auch Lochstrahlventile oder andere gängige Ventilarten. Das Rückschlagventil 30 enthält in einem Gehäuse 32, das eine austrittsseitige Öffnung 34 aufweist, einen Nadelsitz 36, der mittels Zug- oder Druckfedern 38 mit dem Gehause 32 verbunden ist. Der Nadelsitz 36 verschließt die austrittsseitige Öffnung 34 und läßt nur bei einem entsprechenden Flüssigkeitsdruck des über eine zuleitungsseitige Öffnung 35 zugeführten Flüssigkeitsstroms 40 die Flüssigkeit in den das Rückschlagventil 30 umgebenden Gasstrom entweichen. Besonders vorteilhaft ist es, das Rückschlagventil 30 so zu dimensionieren, daß dessen Nadelsitz 36 in einem schwingenden Zustand zwischen geöffneter und geschlossener Position gehalten wird, da dadurch der austretende Flüsssigkeitsstrom 40 zerhackt und die Zerstäubungswirkung der Zerstäubungsvorrichtung verstärkt wird. Dies geschieht über die Wahl einer entsprechenden Schwingungsmasse und Federkonstante, wobei ein schwingendes Feder-Masse-System entsteht.

Alle Komponenten der Zerstäubungsvorrichtung sind beispielsweise aus rostfreiem Stahl gefertigt, es lassen sich aber auch andere beständige und korrosionsfeste Materialien verwenden.

Zur Erzeugung des Wasserstoffs im nachgeschalteten Reformer können je nach Anforderungen verschiedene Eduktgemische zum Einsatz kommen. So läßt sich Wasserstoff durch partielle Oxidation von Kraftstoffen unter Zusatz von wahlweise Wasserdampf, Luft oder einem Gemisch aus beidem gewinnen. Die Umsetzung erfolgt üblicherweise an einem beheizbaren Katalysator, wobei als Kraftstoffe Benzin, Diesel, Methan oder Methanol verwendet werden können. Weiterhin eignen sich auch Methanol/Wassermischungen oder Benzin/Wasseremulsionen.

Je nach Lastanforderung an die Brennstoffzelle sind verschiedene Betriebszustände des Reformers bzw. des Gesamtsystems zu unterscheiden. Die erfindungsgemäße Zerstäubungsvorrichtung ist auch bei wechselnden Betriebszuständen stets in der Lage, die benötigten Edukte in der erforderlichen Menge und Zusammensetzung dem System zur Verfügung zu stellen.

Unter stationären Betriebsbedingungen müssen dem Reformer Luft und/oder Wasserdampf zugeführt werden. Dabei können Luft und Wasserdampf entweder in bereits vorgemischter Form oder als weitestgehend getrennte Gasströme dem Reformer zuführt werden. Der flüssige Kraftstoff wird beispielsweise über die Flüssigkeitszuleitung 16 der Zerstäubungsvorrichtung zugeführt und gelangt in feinstverteilter Form in den Reformer. Je nach Betriebszustand des Reformers kann mittels der Zerstäubungsvorrichtung dem System auch Wasser über die der Flüssigkeitszuleitungen 18 zugeführt werden. Dies ist vor allen Dingen bei abrupten Lastwechselvorgängen von Bedeutung. Weiterhin ist es möglich, der Zerstäubungsvorrichtung Kraftstoff/Wassermischungen zuzuführen.

Während der Kaltstartphase des Systems steht kein Wasserdampf zur Verfügung und das Wasser wird in flüssiger Form dem Reformer zugeführt. Der hohe Zerstäubungsgrad des von der erfindungsgemäßen Zerstäubungsvorrichtung erzeugten Gas/Flüssigkeitsgemisches bewirkt eine deutliche Beschleunigung des Startvorgangs. Ergänzend kann das Startverhalten durch einen beheizten Katalysator im Reformer weiter verbessert werden.

Wird die erfindungsgemäße Zerstäubungsvorrichtung mit einem entsprechenden Dosiersystem für die gasförmigen und flüssigen Edukte gekoppelt, so ergibt sich vorteilhaft eine räumliche Trennung von Dosierung und Zerstäubung. Dies ist vor allem dann von Bedeutung, wenn die Zerstäubungsvorrichtung in die Reaktorwand des Reformers integriert wird, da die Dosierventile bei geringer räumlicher Distanz zum Reformer aufwendig gekühlt werden müßten.

Die erfindungsgemäße Zerstäubungsvorrichtung ist nicht auf das beschriebene Ausführungsbeispiel beschränkt, sondern es sind weitere Ausgestaltungen einer Zerstäuberdüse denkbar, die auf einer gasstromunterstützten Zerstäubung beruhen und bei denen beispielsweise der Flüssigkeitsstrom 17, 19 in Strömungsrichtung des Gasstroms 11 in das Venturirohr 12 gelangt.

## Patentansprüche

1. Zerstäubungsvorrichtung für ein Gas/Flüssigkeitsgemisch, insbesondere zum Eintrag in einen chemischen Reformer zur Erzeugung von Wasserstoff, mit mindestens einer Gaszuleitung für die Zufuhr eines Gasstroms und mindestens einer Flüssigkeitszuleitung für die Zufuhr eines Flüssigkeitsstroms, wobei die Flüssigkeitszuleitung an einer Austrittsstelle in die Gaszuleitung mündet, wobei ein erstes Venturirohr (12) vorgesehen ist, das vom Gasstrom (11, 11a) der Gaszuleitung durchströmt ist, und wobei die Austrittsstelle (16a, 18a) im Bereich des geringsten Durchmessers (14) in das erste Venturirohr (12) mündet, **dadurch gekennzeichnet, daß** mindestens eine erste Flüssigkeitszuleitung (16) für einen Kraftstoff und mindestens eine zweite Flüssigkeitszuleitung (18) für Wasser vorgesehen ist.

2. Zerstäubungsvorrichtung nach Anspruch 1, **dadurch gekennzeichnet, daß** das erste Venturirohr (12) zumindest teilweise innerhalb eines Gasrohres (20) angeordnet ist, das vom Gasstrom (11a, 21) der Gaszuleitung durchströmt ist.

3. Zerstäubungsvorrichtung nach Anspruch 2, **dadurch gekennzeichnet, daß** das Gasrohr (20) im Bereich des Venturirohrs (12) ein zweites Venturirohr (22) ausbildet.

4. Zerstäubungsvorrichtung nach mindestens einem der Ansprüche 1 bis 3, **dadurch gekennzeichnet, daß** das erste Venturirohr (12) so im zweiten Venturirohr (22) angeordnet ist, daß sich die austrittsseitige Öffnung (15) des ersten Venturirohrs (12) im Bereich des geringsten Durchmessers (24) des zweiten Venturirohrs (22) befindet.

5. Zerstäubungsvorrichtung nach Anspruch 3 oder 4, **dadurch gekennzeichnet, daß** das Gasrohr (20) zumindest teilweise innerhalb eines weiteren Gasrohrs größeren Durchmessers angeordnet ist, das vom Gasstrom (11a, 21) der Gaszuleitung durchströmt ist.

6. Zerstäubungsvorrichtung nach mindestens einem der Ansprüche 1 bis 5, **dadurch gekennzeichnet, daß** das weitere Gasrohr im Bereich des zweiten Venturirohrs (22) ein drittes Venturirohr ausbildet.

7. Zerstäubungsvorrichtung nach Anspruch 6, **dadurch gekennzeichnet, daß** das.zweite Venturirohr (22) so im dritten Venturirohr angeordnet ist, daß sich die austrittsseitige Öffnung des zweiten Venturirohrs (22) im Bereich des geringsten Durchmessers des dritten Venturirohrs befindet.

8. Zerstäubungsvorrichtung nach mindestens einem der Ansprüche 1 bis 7, **dadurch gekennzeichnet, daß** als Flüssigkeiten Wasser und/oder ein Kraftstoff zuleitbar sind.

9. Zerstäubungsvorrichtung nach mindestens einem der Ansprüche 1 bis 8, **dadurch gekennzeichnet, daß** die Austrittsstelle (16a, 18a) so im ersten venturirohr (12) angeordnet ist, daß die Öffnung der Austrittsstelle (16a, 18a) entgegen der Strömungsrichtung des Gasstroms (11, 11a) weist.

10. Zerstäubungsvorrichtung nach mindestens einem der Ansprüche 1 bis 9, **dadurch gekennzeichnet, daß** in der Flüssigkeitszuleitung (16, 18) ein federgestütztes Rückschlagventil (30) vorgesehen ist, um ein Nachtropfen der Flüssigkeit zu verhindern.

11. Zerstäubungsvorrichtung nach Anspruch 10, **dadurch gekennzeichnet, daß** das federgestützte Rückschlagventil (30) als schwingfähiges Feder-Masse-System ausgelegt ist.

12. Verwendung einer Zerstäubungsvorrichtung nach mindestens einem der Ansprüche 1 bis 11 zur Zerstäubung flüssiger Edukte eines Reformers für Brennstoffzellen.

## Claims

1. Device for atomizing a gas/liquid mixture, in particular to be introduced into a chemical reformer for generating hydrogen, having at least one gas feedline for supplying a gas stream and at least one liquid feedline for supplying a liquid stream, the liquid feedline opening out into the gas feedline at an outlet point, with a first venturi tube (12), through which the gas stream (11, 11a) of the gas feedline flows, being provided, and with the outlet point (16a, 18a) opening out into the first venturi tube (12) in the region of its narrowest diameter (14), **characterized in that** at least one first liquid feedline (16) for a fuel and at least one second liquid feedline (18) for water are provided.

2. Atomization device according to Claim 1, **characterized in that** the first venturi tube (12) is arranged at least partially inside a gas tube (20) through which the gas stream (11a, 21) of the gas feedline flows.

3. Atomization device according to Claim 2, **characterized in that** the gas tube (20) forms a second venturi tube (22) in the region of the venturi tube (12).

4. Atomization device according to at least one of Claims 1 to 3, **characterized in that** the first venturi tube (12) is arranged in such a way in the second venturi tube (22) that the outlet-side opening (15) of the first venturi tube (12) is located in the region of the narrowest diameter (24) of the second venturi tube (22).

5. Atomization device according to Claim 3 or 4, **characterized in that** the gas tube (20) is arranged at least partially inside a further gas tube of larger diameter, through which the gas stream (11a, 21) of the gas feedline flows.

6. Atomization device according to at least one of Claims 1 to 5, **characterized in that** the further gas tube forms a third venturi tube in the region of the second venturi tube (22).

7. Atomization device according to Claim 6, **characterized in that** the second venturi tube (22) is arranged in such a way in the third venturi tube that the outlet-side opening of the second venturi tube (22) is located in the region of the narrowest diameter of the third venturi tube.

8. Atomization device according to at least one of Claims 1 to 7, **characterized in that** the liquids which can be supplied include water and/or a fuel.

9. Atomization device according to at least one of Claims 1 to 8, **characterized in that** the outlet point (16a, 18a) is arranged in such a way in the first venturi tube (12) that the opening of the outlet point (16a, 18a) faces in the opposite direction to the direction of flow of the gas stream (11, 11a).

10. Atomization device according to at least one of Claims 1 to 9, **characterized in that** a spring-assisted nonreturn valve (30) is provided in the liquid feedline (16, 18), in order to prevent drops of liquid from running back.

11. Atomization device according to Claim 10, **characterized in that** the spring-assisted nonreturn valve (30) is designed as an oscillatory spring-mass system.

12. Use of an atomization device according to at least one of Claims 1 to 11 for the atomization of liquid starting materials for a reformer for fuel cells.

## Revendications

1. Dispositif de pulvérisation pour un mélange gaz/liquide, destiné en particulier à être chargé dans un reformeur chimique pour la production d'hydrogène, comprenant au moins une conduite d'arrivée de gaz pour l'amenée d'un courant de gaz et au moins une conduite d'arrivée de liquide pour l'amenée d'un courant de liquide, la conduite d'arrivée de liquide débouchant dans la conduite d'arrivée de gaz au niveau d'une zone de sortie, avec un premier tube de Venturi (12) parcouru par le courant de gaz (11, 11a) de la conduite d'arrivée de gaz, et dont la zone de sortie (16a, 18a) débouche dans la région du diamètre minimum (14) du premier tube de Venturi (12),
**caractérisé en ce qu'**
au moins une première conduite d'arrivée de liquide (16) est prévue pour un carburant et au moins une deuxième conduite d'arrivée de liquide (18) est prévue pour de l'eau.

2. Dispositif de pulvérisation selon la revendication 1,
**caractérisé en ce que**
le premier tube de Venturi (12) est disposé au moins partiellement à l'intérieur d'un tube à gaz (20) qui est parcouru par le courant de gaz (11a, 21) de la conduite d'arrivée de gaz.

3. Dispositif de pulvérisation selon la revendication 2,
**caractérisé en ce que**
dans la région du tube de Venturi (12), le tube à gaz (20) forme un deuxième tube de Venturi (22).

4. Dispositif de pulvérisation selon au moins une des revendications 1 à 3,
**caractérisé en ce que**
le premier tube de Venturi (12) est disposé dans le deuxième tube de Venturi (22) de manière que l'ouverture côté sortie (15) du premier tube de Venturi (12) se trouve dans la région du diamètre minimum (24) du deuxième tube de Venturi (22).

5. Dispositif de pulvérisation selon la revendication 3 ou 4,
**caractérisé en ce que**
le tube à gaz (20) est disposé au moins partiellement à l'intérieur d'un autre tube à gaz de plus grand diamètre qui est parcouru par le courant de gaz (11a, 21) de la conduite d'arrivée de gaz.

6. Dispositif de pulvérisation selon au moins une des revendications 1 à 5,
**caractérisé en ce que**
dans la région du deuxième tube de Venturi (22), l'autre tube à gaz forme un troisième tube de Venturi.

7. Dispositif de pulvérisation selon la revendication 6,
**caractérisé en ce que**
le deuxième tube de Venturi (22) est disposé dans le troisième tube de Venturi de telle manière que l'ouverture coté sortie du deuxième tube de Venturi (22) se trouve dans la région du diamètre minimum du troisième tube de Venturi.

8. Dispositif de pulvérisation selon au moins une des revendications 1 à 7,
**caractérisé en ce que**
comme liquides on peut amener de l'eau et/ou un combustible.

9. Dispositif de pulvérisation selon au moins une des revendications 1 à 8,
**caractérisé en ce que**
la zone de sortie (16a, 18a) est disposée dans le premier tube de Venturi (12) de telle manière que l'ouverture de la zone de sortie (16a, 18a) soit dirigée en sens inverse de l'écoulement du courant de gaz (11, 11a).

10. Dispositif de pulvérisation selon au moins une des revendications 1 à 9,
**caractérisé en ce qu'**
un clapet anti-retour assisté par ressort (30) est prévu dans la conduite d'arrivée de liquide (16, 18) pour empêcher le liquide de continuer à s'égoutter.

11. Dispositif de pulvérisation selon la revendication 10,
**caractérisé en ce que**
le clapet anti-retour assisté par ressort (30) est conçu sous la forme d'un système oscillant ressort-masse.

12. Emploi d'un dispositif de pulvérisation selon une des revendications 1 à 11, pour la pulvérisation d'éduits d'un reformeur pour piles à combustible.
